# EUROPEAN PATENT APPLICATION

(11) **EP 4 589 150 A1**
(43) Date of publication of application: **23.07.2025**
(21) Application number: 23883034.3
(22) Date of filing: 23.10.2023
(51) Int. Cl.: F04D 17/10, F04D 25/06, F04D 29/28, F04D 29/42, H02K 5/20, F04D 29/58, F04D 29/056, F04D 29/053

(54) **TURBO COMPRESSOR HAVING MOTOR DISPOSED UPSTREAM OF COMPRESSED GAS FLOW PATH**

(30) Priority: 25.10.2022 KR 20220137923
(71) Applicant: TNE Korea Co., Ltd., Cheongju-si, Chungcheongbuk-do 28220 (KR)
(72) Inventor: KIM, Kyeong Su, Daejeon 34067 (KR)
(74) Representative: BCKIP Part mbB
(86) International application number: PCT/KR2023/016478
(87) International publication number: WO 2024/090928

(57) **Abstract**

Provided is a turbo compressor including a motor including a rotating shaft with an end coupled to the impeller, to rotate the impeller; a housing including a motor accommodation space for accommodating the motor; and a cooling gas channel provided to pass through the motor accommodation space and formed to allow a cooling gas accommodated inside to flow, wherein the compressed gas inlet is disposed at a front end of the housing while the impeller is disposed at a rear end of the housing, wherein the motor is disposed between the compressed gas inlet and the impeller, wherein the rotating shaft includes a borehole extending along a longitudinal direction, wherein the cooling gas channel includes a first cooling gas channel starting from the compressed gas inlet, passing along an outer circumferential surface of the rotating shaft, and reaching the impeller; and a second cooling gas channel starting from the compressed gas inlet, passing through the borehole of the rotating shaft, and reaching the impeller, and wherein the gas sucked in from the compressed gas inlet by suction force of the impeller passes through the first and second cooling gas channels to cool the motor. According to the present invention, a stator and rotor of the motor may be rapidly cooled using a relatively low-temperature cooling gas sucked in from the compressed gas inlet.

## Description

### TECHNICAL FIELD

The present invention relates to a turbo compressor, and more particularly, to a turbo compressor capable of rapidly cooling a stator and rotor of a motor using a relatively low-temperature cooling gas sucked in from a compressed gas inlet.

### BACKGROUND ART

A turbo compressor or turbo blower is a centrifugal pump that sucks in and compresses external air or gas and then discharges the compressed air or gas to the outside by rotating an impeller at high speed, and is commonly used for powder transfer or aeration in sewage treatment plants and also used in industrial processes or mounted on vehicles these days.

In the turbo compressor, high frictional heat is inevitably produced by a motor and bearings due to the high-speed rotation of the impeller and thus major heat sources such as the motor and bearings need to be cooled.

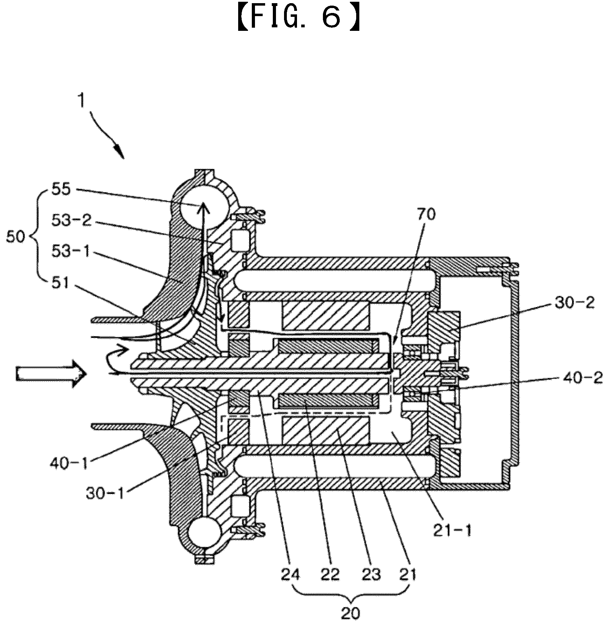

An example of a general turbo compressor is shown in FIG. 6. This turbo compressor 1 has a structure in which an impeller 51 is disposed in front of a motor 20. A portion of air compressed by the impeller 51 is introduced into a space where the motor 20 is accommodated, first cools a stator 23 of the motor 20, and then cools a rotor, i.e., a permanent magnet 22, coupled to a rotating shaft 24 while passing along a borehole inside the rotating shaft 24 through a hole formed at the rear end of the rotating shaft 24.

The air having cooled the permanent magnet 22 is discharged toward the front of the rotating shaft 24 through a hole formed at the front end of the rotating shaft 24, and then introduced into and compressed by the impeller 51 again.

According to the above-described general turbo compressor 1, the air is heated during compression by the impeller 51 and further heated after cooling the stator 23 of the motor 20. Because this double-heated air cools the rotor, i.e., the permanent magnet 22, of the motor 20, the efficiency of cooling the stator 23 and the rotor 22 of the motor 20 is reduced.

Particularly, the above problem becomes more serious when the motor 20 rotates at high speed. When the heat produced by the high-speed motor is not effectively dissipated, the overall motor performance may decrease due to demagnetization or performance degradation of the permanent magnet 22 used as the rotor.

Additionally, the general turbo compressor 1 uses a portion of the air compressed by the impeller 51 to cool the motor 20. After being heated during cooling, the air flows back to the upstream side of the impeller 51 and is compressed again, resulting in "vortex flow". Thus, the compression efficiency of the air ultimately discharged through a compressed air outlet 55 is reduced.

### DETAILED DESCRIPTION OF THE INVENTION

### TECHNICAL PROBLEM

The present invention provides a turbo compressor with an improved structure to easily cool a stator and rotor of a motor using a relatively low-temperature cooling gas sucked in from a compressed gas inlet.

### TECHNICAL SOLUTION

According to an aspect of the present invention, there is provided a turbo compressor capable of compressing a gas and supplying the compressed gas to outside, the turbo compressor including a compressed gas inlet for sucking in the gas; an impeller for compressing the gas introduced through the compressed gas inlet; a compressed gas outlet for discharging the gas compressed by the impeller, to outside; a compression unit including a compressed gas channel connected from the compressed gas inlet to the compressed gas outlet; a motor including a rotating shaft with an end coupled to the impeller, to rotate the impeller; a housing including a motor accommodation space for accommodating the motor; and a cooling gas channel provided to pass through the motor accommodation space and formed to allow a cooling gas accommodated inside to flow, wherein the compressed gas inlet is disposed at a front end of the housing while the impeller is disposed at a rear end of the housing, wherein the motor is disposed between the compressed gas inlet and the impeller, wherein the rotating shaft includes a borehole extending along a longitudinal direction, wherein the cooling gas channel includes a first cooling gas channel starting from the compressed gas inlet, passing along an outer circumferential surface of the rotating shaft, and reaching the impeller; and a second cooling gas channel starting from the compressed gas inlet, passing through the borehole of the rotating shaft, and reaching the impeller, and wherein the gas sucked in from the compressed gas inlet by suction force of the impeller passes through the first and second cooling gas channels to cool the motor.

The first and second cooling gas channels may be formed to allow the cooling gas to flow unidirectionally from the compressed gas inlet to the impeller.

The first cooling gas channel may be formed to cool a stator of the motor.

The second cooling gas channel may be formed to cool a rotor of the motor.

At least one first through-hole for allowing the gas sucked in from the compressed gas inlet to flow into the motor accommodation space may be formed at the front end of the housing, and at least one second through-hole for allowing the gas accommodated in the motor accommodation space to flow toward the impeller may be formed at the rear end of the housing.

At least one of the first and second through-holes may include a plurality of through-holes arranged at predetermined intervals along a circumferential direction of the rotating shaft.

The motor may further include thrust bearings disposed at a front end of the rotating shaft, and the cooling gas channel may further include a third cooling gas channel starting from the compressed gas inlet, passing through the thrust bearings, and reaching the impeller.

At least one third through-hole for allowing the gas sucked in from the compressed gas inlet to flow toward the thrust bearings may be formed at the front end of the housing.

The third through-hole may include a circular ring-shaped hole formed by cooperation of a circular hole provided at the front end of the housing, and the front end of the rotating shaft disposed in the circular hole.

The rotating shaft may include a gas inlet hole connected to the borehole of the rotating shaft and formed at a front end of the rotating shaft; and a gas outlet hole connected to the borehole of the rotating shaft and formed at a rear end of the rotating shaft, and the gas outlet hole may be disposed between a stator of the motor and the impeller.

### ADVANTAGEOUS EFFECTS

According to the present invention, a turbo compressor capable of compressing a gas and supplying the compressed gas to outside includes a compressed gas inlet for sucking in the gas; an impeller for compressing the gas introduced through the compressed gas inlet; a compressed gas outlet for discharging the gas compressed by the impeller, to outside; a compression unit including a compressed gas channel connected from the compressed gas inlet to the compressed gas outlet; a motor including a rotating shaft with an end coupled to the impeller, to rotate the impeller; a housing including a motor accommodation space for accommodating the motor; and a cooling gas channel provided to pass through the motor accommodation space and formed to allow a cooling gas accommodated inside to flow, wherein the compressed gas inlet is disposed at a front end of the housing while the impeller is disposed at a rear end of the housing, wherein the motor is disposed between the compressed gas inlet and the impeller, wherein the rotating shaft includes a borehole extending along a longitudinal direction, wherein the cooling gas channel includes a first cooling gas channel starting from the compressed gas inlet, passing along an outer circumferential surface of the rotating shaft, and reaching the impeller; and a second cooling gas channel starting from the compressed gas inlet, passing through the borehole of the rotating shaft, and reaching the impeller, and wherein the gas sucked in from the compressed gas inlet by suction force of the impeller passes through the first and second cooling gas channels to cool the motor. Thus, a stator and rotor of the motor may be rapidly cooled using a relatively low-temperature cooling gas sucked in from the compressed gas inlet.

### DESCRIPTION OF THE DRAWINGS

FIG. 1 is a cross-sectional view of a turbo compressor according to an embodiment of the present invention.
FIG. 2 is a partially enlarged view of the turbo compressor illustrated in FIG. 1.
FIG. 3 is a partially enlarged view of the front end of the turbo compressor illustrated in FIG. 2.

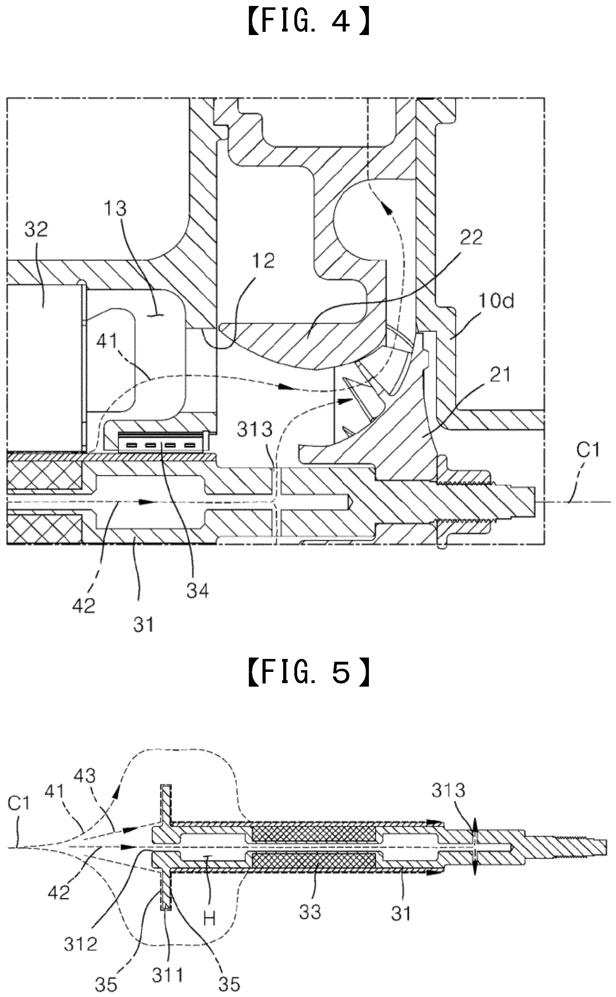

FIG. 4 is a partially enlarged view of the rear end of the turbo compressor illustrated in FIG. 2.
FIG. 5 is a cross-sectional view of a rotating shaft illustrated in FIG. 1 and its surrounding area.
FIG. 6 is a cross-sectional view of a general turbo compressor.

### BEST MODE

Hereinafter, the present invention will be described in detail by explaining embodiments of the invention with reference to the attached drawings.

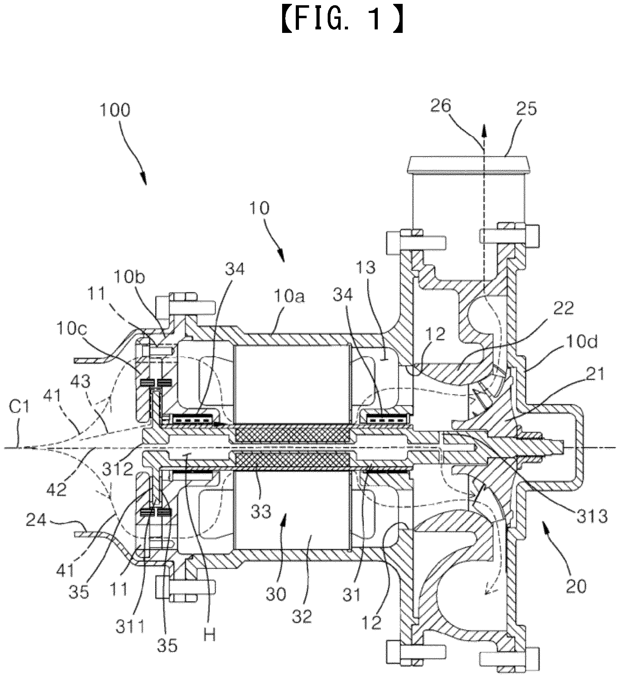

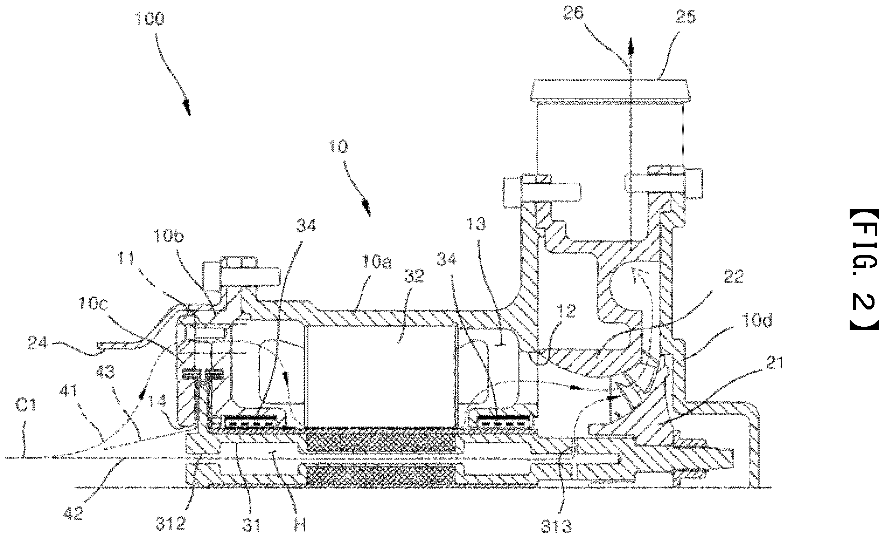

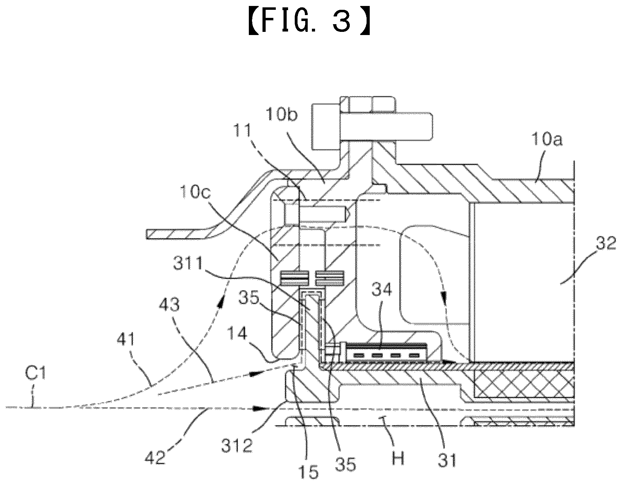

FIG. 1 is a cross-sectional view of a turbo compressor according to an embodiment of the present invention, and FIG. 2 is a partially enlarged view of the turbo compressor illustrated in FIG. 1. FIG. 3 is a partially enlarged view of the front end of the turbo compressor illustrated in FIG. 2.

Referring to FIGS. 1 to 3, a turbo compressor 100 according to an embodiment of the present invention is a centrifugal pump that sucks in and compresses external gas and then discharges the compressed gas to the outside by rotating an impeller at high speed, and is also called a turbo blower. The turbo compressor 100 includes a housing 10, a compression unit 20, a motor 30, and a cooling gas channel. The following description assumes that the gas to be compressed is air.

The housing 10 is a metal housing, is a cylindrical member including a motor accommodation space 13, has a cross-section with a first central axis C1 as the center of a circle, and extends along the first central axis C1.

The motor accommodation space 13 is a space with a shape corresponding to the motor 30 to be described below to accommodate the motor 30.

As shown in FIG. 2, an impeller 21 of the compression unit 20 is disposed at the rear end of the housing 10.

The housing 10 is divided into a plurality of components to mount the motor 30 therein, and includes a first housing 10a, a second housing 10b, a third housing 10c, and a fourth housing 10d in the current embodiment.

The first housing 10a is a cylindrical member having a cross-section with the first central axis C1 as the center of a circle.

At least one second through-hole 12 for allowing the gas accommodated in the motor accommodation space 13 to flow toward the impeller 21 is formed at the rear end of the first housing 10a.

In the current embodiment, a plurality of second through-holes 12 may be provided and arranged at predetermined intervals along the circumferential direction of a rotating shaft 31 to be described below.

The second through-hole 12 may be formed in various shapes, e.g., a circular hole, a slit-shaped hole extending along the radius direction of the rotating shaft 31, or a fanshaped hole decreasing in width toward the rotating shaft 31.

In the current embodiment, the second through-hole 12 is connected to the inside of a gas guide member 22 to be described below.

The second housing 10b is a disc-shaped member detachably attached to the front end of the first housing 10a, and is provided in a shape capable of enabling the mounting of journal bearings 34, thrust bearings 35, and rotating shaft 31 to be described below, as shown in FIG. 3.

The second housing 10b is provided in a shape capable of closing the front end of the first housing 10a.

The third housing 10c is a disc-shaped member detachably attached to the front end of the second housing 10b, and is provided in a shape capable of enabling the mounting of the thrust bearings 35 and rotating shaft 31 to be described below, as shown in FIG. 3.

The third housing 10c is provided to restrict a thrust bearing runner 311 and thrust bearings 35 to be described below, from falling off forward.

A circular hole 14 with a diameter large enough to accommodate the rotating shaft 31 is formed at the center of the third housing 10c.

As shown in FIG. 2, at least one first through-hole 11 for allowing the gas sucked in from the compressed gas inlet 24 to flow into the motor accommodation space 13 is formed in the second and third housings 10b and 10c.

In the current embodiment, a plurality of first through-holes 11 may be provided and arranged at predetermined intervals along the circumferential direction of the rotating shaft 31.

The first through-hole 11 may be formed in various shapes, e.g., a circular hole, a slit-shaped hole extending along the radius direction of the rotating shaft 31, or a fanshaped hole decreasing in width toward the rotating shaft 31.

In the third housing 10c, at least one third through-hole 15 for allowing the gas sucked in from the compressed gas inlet 24 to flow toward the thrust bearings 35 is formed.

In the current embodiment, as shown in FIG. 3, the third through-hole 15 includes a circular ring-shaped hole 15 formed by the cooperation of the circular hole 14 provided in the third housing 10c, and the front end of the rotating shaft 31 disposed in the circular hole 14 and to be described below.

The fourth housing 10d is a disc-shaped member as shown in FIG. 1, and is a member for closing the rear end of the gas guide member 22 to be described below.

The compression unit 20 is a device for sucking in and compressing external air, and includes the impeller 21 and the gas guide member 22.

The impeller 21 is a major component of the centrifugal pump, is a wheel including a plurality of curved blades, and is mounted to rotate at high speed.

The gas guide member 22 is a metal member disposed in front of the impeller 21, and is a member for guiding the air introduced into and to be compressed by the impeller 21, and the air compressed by the impeller 21.

The gas guide member 22 is provided to close the rear end of the first housing 10a.

In the current embodiment, as shown in FIG. 1, the gas guide member 22 is provided in the form of a scroll casing including channels for allowing the air having passed through the impeller 21 to flow in a spiral shape.

The impeller 21 compresses the air introduced through the compressed gas inlet 24 to be described below, and the air compressed by the impeller 21 is discharged to the outside through a compressed gas outlet 25.

The compressed gas inlet 24 is a member for sucking in external air to be compressed, is disposed at the front end of the housing 10, and is detachably coupled to the front end of the second housing 10b in the current embodiment.

The air sucked into the compressed gas inlet 24 is compressed while moving along a compressed gas channel 26 connected from the compressed gas inlet 24 to the compressed gas outlet 25.

The motor 30 is an electric motor for generating rotational force, and is a device for supplying high-speed rotational force to the impeller 21. The motor 30 includes the rotating shaft 31, a stator 32, a rotor 33, the journal bearings 34, and the thrust bearings 35.

The rotating shaft 31 is a rod member extending along the first central axis C1, and the rear end thereof is relatively non-rotatably coupled to the impeller 21 to rotate the impeller 21.

The rotating shaft 31 includes a borehole H extending along the first central axis C1 which corresponds to the longitudinal direction of the rotating shaft 31.

The thrust bearing runner 311 with the position and shape corresponding to the thrust bearings 35 is provided at the front end of the rotating shaft 31.

In the current embodiment, the thrust bearing runner 311 is a general disc-shaped runner.

A gas inlet hole 312 connected to the borehole H of the rotating shaft 31 is formed at the front end of the rotating shaft 31.

The gas inlet hole 312 is a hole for guiding the air introduced through the compressed gas inlet 24, into the borehole H.

In the current embodiment, the gas inlet hole 312 is positioned inside the circular hole 14 of the third housing 10c.

At least one gas outlet hole 313 connected to the borehole H of the rotating shaft 31 is formed at the rear end of the rotating shaft 31.

The gas outlet hole 313 is a hole for guiding the air introduced into the borehole H of the rotating shaft 31, toward the impeller 21.

In the current embodiment, a plurality of gas outlet holes 313 may be provided and arranged at predetermined intervals along the circumferential direction of the rotating shaft 31.

In the current embodiment, as shown in FIG. 1, the gas outlet hole 313 is positioned between the stator 32 of the motor 30 and the impeller 21, and is disposed inside the gas guide member 22.

The stator 32 is a stator wound with a field coil and is fixedly mounted in the motor accommodation space 13.

The rotor 33 is a rotor including a permanent magnet and is coupled to a middle portion of the rotating shaft 31.

The journal bearings 34 are journal foil air bearings rotatably supporting the rotating shaft 31 to reduce frictional force caused by high-speed rotation, and are provided separately at the front and rear ends of the rotating shaft 31.

One of the journal bearings 34 at the front end of the rotating shaft 31 is disposed behind the thrust bearings 35.

The thrust bearings 35 are thrust foil air bearings, and a pair of thrust bearings 35 are disposed on both surfaces of the thrust bearing runner 311.

In the current embodiment, as shown in FIG. 1, the thrust bearings 35 are disposed at the foremost part of the housing 10.

Predetermined gaps are provided between the stator 32 and the rotor 33, between the rotating shaft 31 and the stator 32, between the rotating shaft 31 and the journal bearings 34, and between the thrust bearings 35 and the thrust bearing runner 311.

Consequently, in the current embodiment, the motor 30 is disposed between the compressed gas inlet 24 and the impeller 21.

The cooling gas channel is a gas channel formed to allow a cooling gas accommodated inside to flow, and includes a first cooling gas channel 41, a second cooling gas channel 42, and a third cooling gas channel 43.

Herein, the cooling gas is a gas to be compressed, which is sucked in from the compressed gas inlet 24 by the suction force of the impeller 51, e.g., air.

As shown in FIG. 2, the first cooling gas channel 41 is a cooling gas channel starting from the compressed gas inlet 24, passing along the outer circumferential surface of the rotating shaft 31, and reaching the impeller 21.

In the current embodiment, as shown in FIG. 2, the first cooling gas channel 41 starts from the compressed gas inlet 24, passes sequentially through the first through-hole 11, the front end of the motor accommodation space 13, the space between the stator 32 and the outer circumferential surface of the rotating shaft 31, and the second through-hole 12, and reaches the impeller 21.

Therefore, the first cooling gas channel 41 may rapidly cool the stator 32 of the motor 30.

In the current embodiment, as shown in FIG. 3, the first cooling gas channel 41 is provided to cool the thrust bearings 35 by passing through the space where the thrust bearing runner 311 is accommodated, while penetrating through the first through-hole 11.

As shown in FIG. 2, the second cooling gas channel 42 is a cooling gas channel starting from the compressed gas inlet 24, passing through the borehole H of the rotating shaft 31, and reaching the impeller 21.

In the current embodiment, as shown in FIG. 2, the second cooling gas channel 42 starts from the compressed gas inlet 24, passes sequentially through the gas inlet hole 312, the borehole H of the rotating shaft 31, and the gas outlet hole 313, and reaches the impeller 21.

Therefore, the second cooling gas channel 42 may rapidly cool the rotor 33 of the motor 30.

The third cooling gas channel 43 is a cooling gas channel starting from the compressed gas inlet 24, passing through the thrust bearings 35, and reaching the impeller 21.

In the current embodiment, as shown in FIG. 3, the third cooling gas channel 43 starts from the compressed gas inlet 24, passes sequentially through the thrust bearings 35, the journal bearings 34, the front end of the motor accommodation space 13, the space between the stator 32 and the outer circumferential surface of the rotating shaft 31, and the second through-hole 12, and reaches the impeller 21.

Therefore, the third cooling gas channel 43 may rapidly cool the thrust bearings 35 and the journal bearings 34.

In the current embodiment, as shown in FIG. 3, the third cooling gas channel 43 merges with the first cooling gas channel 41 at the rear end of the motor accommodation space 13.

As a result, the cooling gas channels 41, 42, and 43 are disposed at the front end of the compressed gas channel 26, and the air to be compressed, which flows from the upstream side of the impeller 21 toward the impeller 21 along the compressed gas channel 26, functions as a cooling gas.

An example of the operating method of the above-described turbo compressor 100 will now be described.

When the rotating shaft 31 of the motor 30 rotates, the impeller 21 rotates, and the air sucked in from the compressed gas inlet 24 by the suction force of the impeller 21 flows through the first, second, and third cooling gas channels 41, 42, and 43 to cool the motor 30.

The air having cooled the motor 30 is introduced into the gas guide member 22, compressed by the impeller 21, and then discharged to the outside through the compressed gas outlet 25.

In this case, the air moving along the first, second, and third cooling gas channels 41, 42, and 43 flows unidirectionally from the compressed gas inlet 24 to the impeller 21 without recirculating back to the compressed gas inlet 24.

As shown in FIG. 2, the air flowing along the first cooling gas channel 41 may start from the compressed gas inlet 24, pass sequentially through the first through-hole 11, the front end of the motor accommodation space 13, the space between the stator 32 and the outer circumferential surface of the rotating shaft 31, and the second through-hole 12, and reach the impeller 21, thereby rapidly cooling the stator 32 and the outer circumferential surface of the rotating shaft 31.

As shown in FIG. 2, the air flowing along the second cooling gas channel 42 may start from the compressed gas inlet 24, pass sequentially through the gas inlet hole 312, the borehole H of the rotating shaft 31, and the gas outlet hole 313, and reach the impeller 21, thereby rapidly cooling the rotor 33 and the borehole H of the rotating shaft 31.

As shown in FIG. 3, the air flowing along the third cooling gas channel 43 may start from the compressed gas inlet 24, pass sequentially through the thrust bearings 35, the journal bearings 34, the front end of the motor accommodation space 13, the space between the stator 32 and the outer circumferential surface of the rotating shaft 31, and the second through-hole 12, and reach the impeller 21, thereby rapidly cooling the thrust bearings 35 and the journal bearings 34.

The above-described turbo compressor 100 is a turbo compressor capable of compressing a gas and supplying the compressed gas to the outside, and includes the compressed gas inlet 24 for sucking in the gas; the impeller 21 for compressing the gas introduced through the compressed gas inlet 24; the compressed gas outlet 25 for discharging the gas compressed by the impeller 21, to the outside; the compression unit 20 including the compressed gas channel 26 connected from the compressed gas inlet 24 to the compressed gas outlet 25; the motor 30 including the rotating shaft 31 with an end coupled to the impeller 21, to rotate the impeller 21; the housing 10 including the motor accommodation space 13 for accommodating the motor 30; and the cooling gas channel provided to pass through the motor accommodation space 13 and formed to allow the cooling gas accommodated inside to flow, wherein the compressed gas inlet 24 is disposed at the front end of the housing 10 while the impeller 21 is disposed at the rear end of the housing 10, wherein the motor 30 is disposed between the compressed gas inlet 24 and the impeller 21, wherein the rotating shaft 31 includes the borehole H extending along the longitudinal direction, wherein the cooling gas channel includes the first cooling gas channel 41 starting from the compressed gas inlet 24, passing along the outer circumferential surface of the rotating shaft 31, and reaching the impeller 21; and the second cooling gas channel 42 starting from the compressed gas inlet 24, passing through the borehole H of the rotating shaft 31, and reaching the impeller 21, and wherein the gas sucked in from the compressed gas inlet 24 by the suction force of the impeller 21 passes through the first and second cooling gas channels 41 and 42 to cool the motor 30. Thus, the stator 32 and the rotor 33 of the motor 30 may be rapidly cooled using a relatively low-temperature cooling gas sucked in from the compressed gas inlet 24.

According to the turbo compressor 100, because the first and second cooling gas channels 41 and 42 are formed to allow the cooling gas to flow unidirectionally from the compressed gas inlet 24 to the impeller 21 without recirculating, unlike the conventional turbo compressor 1 where "vortex flow" causes the heated cooling air to return to the upstream side of the impeller and be compressed again, the compression efficiency of the impeller 21 is excellent.

According to the turbo compressor 100, because the first cooling gas channel 41 is formed to cool the stator 32 of the motor 30, the stator 32 may be rapidly cooled using a relatively low-temperature cooling gas. Herein, the amount of air flowing along the first cooling gas channel 41 may be easily controlled by adjusting the sizes or numbers of first through-holes 11 and second through-holes 12.

According to the turbo compressor 100, because the second cooling gas channel 42 is formed to cool the rotor 33 of the motor 30, the rotor 33 may be rapidly cooled using a relatively low-temperature cooling gas. Herein, the amount of air flowing along the second cooling gas channel 42 may be easily controlled by adjusting the sizes or numbers of gas inlet holes 312, boreholes H, and gas outlet holes 313.

According to the turbo compressor 100, because at least one first through-hole 11 for allowing the gas sucked in from the compressed gas inlet 24 to flow into the motor accommodation space 13 is formed at the front end of the housing 10, and at least one second through-hole 12 for allowing the gas accommodated in the motor accommodation space 13 to flow toward the impeller 21 is formed at the rear end of the housing 10, the first cooling gas channel 41 for allowing the cooling gas to flow along the longitudinal direction of the rotating shaft 31 may be easily formed.

According to the turbo compressor 100, because at least one of the first and second through-holes 11 and 12 includes a plurality of through-holes arranged at predetermined intervals along the circumferential direction of the rotating shaft 31, the flow rate and streamline shape of the air flowing along the first cooling gas channel 41 may be easily controlled.

According to the turbo compressor 100, because the motor 30 further includes the thrust bearings 35 disposed at the front end of the rotating shaft 31, and the cooling gas channel further includes the third cooling gas channel 43 starting from the compressed gas inlet 24, passing through the thrust bearings 35, and reaching the impeller 21, the thrust bearings 35 may be rapidly cooled using a relatively low-temperature cooling gas.

According to the turbo compressor 100, because at least one third through-hole 15 for allowing the gas sucked in from the compressed gas inlet 24 to flow toward the thrust bearings 35 is formed at the front end of the housing 10, the flow rate and streamline shape of the air flowing along the third cooling gas channel 43 may be easily controlled.

According to the turbo compressor 100, because the third through-hole 15 includes the circular ring-shaped hole 15 formed by the cooperation of the circular hole 14 provided at the front end of the housing 10, and the front end of the rotating shaft 31 disposed in the circular hole 14, the third through-hole 15 may be easily formed without a complex cutting process.

According to the turbo compressor 100, because the rotating shaft 31 includes the gas inlet hole 312 connected to the borehole H of the rotating shaft 31 and formed at the front end of the rotating shaft 31; and the gas outlet hole 313 connected to the borehole H of the rotating shaft 31 and formed at the rear end of the rotating shaft 31, and the gas outlet hole 313 is disposed between the stator 32 of the motor 30 and the impeller 21, the air flowing along the second cooling gas channel 42 may directly reach the impeller 21 without being mixed with the air flowing along the other cooling gas channels 41 and 43. As such, the flow rate of the air flowing along the second cooling gas channel 42 may be controlled separately and very easily.

Although the cooling gas channel does not include cooling fins in the current embodiment, the cooling gas channel may include cooling fins. In this case, the cooling fins may be integrated with the housing 10, or be produced as a separate member and then coupled to the housing 10 through press fitting or the like.

Although the bearings 34 and 35 are provided as foil air bearings in the current embodiment, other types of air bearings or various types of other bearings may also be used.

Although a sealing means for airtightness is not described in the current embodiment, various types of sealing means may be used.

While the present invention has been particularly shown and described with reference to embodiments thereof, it will be understood by one of ordinary skill in the art that various changes in form and details may be made therein without departing from the scope of the present invention as defined by the following claims.

## Claims

1. A turbo compressor capable of compressing a gas and supplying the compressed gas to outside, the turbo compressor comprising:
a compressed gas inlet for sucking in the gas;
an impeller for compressing the gas introduced through the compressed gas inlet;
a compressed gas outlet for discharging the gas compressed by the impeller, to outside;
a compression unit comprising a compressed gas channel connected from the compressed gas inlet to the compressed gas outlet;
a motor comprising a rotating shaft with an end coupled to the impeller, to rotate the impeller;
a housing comprising a motor accommodation space for accommodating the motor; and
a cooling gas channel provided to pass through the motor accommodation space and formed to allow a cooling gas accommodated inside to flow,
wherein the compressed gas inlet is disposed at a front end of the housing while the impeller is disposed at a rear end of the housing,
wherein the motor is disposed between the compressed gas inlet and the impeller,
wherein the rotating shaft comprises a borehole extending along a longitudinal direction,
wherein the cooling gas channel comprises:
a first cooling gas channel starting from the compressed gas inlet, passing along an outer circumferential surface of the rotating shaft, and reaching the impeller; and
a second cooling gas channel starting from the compressed gas inlet, passing through the borehole of the rotating shaft, and reaching the impeller, and
wherein the gas sucked in from the compressed gas inlet by suction force of the impeller passes through the first and second cooling gas channels to cool the motor.

2. The turbo compressor of claim 1, wherein the first and second cooling gas channels are formed to allow the cooling gas to flow unidirectionally from the compressed gas inlet to the impeller.

3. The turbo compressor of claim 1, wherein the first cooling gas channel is formed to cool a stator of the motor.

4. The turbo compressor of claim 1, wherein the second cooling gas channel is formed to cool a rotor of the motor.

5. The turbo compressor of claim 1, wherein at least one first through-hole for allowing the gas sucked in from the compressed gas inlet to flow into the motor accommodation space is formed at the front end of the housing, and
wherein at least one second through-hole for allowing the gas accommodated in the motor accommodation space to flow toward the impeller is formed at the rear end of the housing.

6. The turbo compressor of claim 5, wherein at least one of the first and second through-holes comprises a plurality of through-holes arranged at predetermined intervals along a circumferential direction of the rotating shaft.

7. The turbo compressor of claim 1, wherein the motor further comprises thrust bearings disposed at a front end of the rotating shaft, and
wherein the cooling gas channel further comprises a third cooling gas channel starting from the compressed gas inlet, passing through the thrust bearings, and reaching the impeller.

8. The turbo compressor of claim 7, wherein at least one third through-hole for allowing the gas sucked in from the compressed gas inlet to flow toward the thrust bearings is formed at the front end of the housing.

9. The turbo compressor of claim 8, wherein the third through-hole comprises a circular ring-shaped hole formed by cooperation of a circular hole provided at the front end of the housing, and the front end of the rotating shaft disposed in the circular hole.

10. The turbo compressor of claim 1, wherein the rotating shaft comprises:
a gas inlet hole connected to the borehole of the rotating shaft and formed at a front end of the rotating shaft; and
a gas outlet hole connected to the borehole of the rotating shaft and formed at a rear end of the rotating shaft, and
wherein the gas outlet hole is disposed between a stator of the motor and the impeller.
